# FASCICULE DE BREVET EUROPEEN

(11) **EP 2 692 005 B1**
(45) Date de publication et mention de la délivrance du brevet: **28.01.2015**
(21) Numéro de dépôt: 12710960.1
(22) Date de dépôt: 29.03.2012
(51) Int. Cl.: H01M 4/90, H01M 4/92, H01M 8/10, H01M 4/86

(54) **PILE A COMBUSTIBLE A MEMBRANE D'ECHANGE DE PROTONS PRESENTANT UNE DUREE DE VIE ACCRUE**
BRENNSTOFFZELLE MIT PROTONENAUSTAUSCHERMEMBRAN MIT ERHÖHTER LEBENSDAUER
FUEL CELL COMPRISING A PROTON-EXCHANGE MEMBRANE, HAVING AN INCREASED SERVICE LIFE

(30) Priorité: 31.03.2011 FR 1152744
(43) Date de publication de la demande: 05.02.2014
(73) Titulaire: Commissariat à l'Énergie Atomique et aux Énergies Alternatives, 75015 Paris (FR)
(72) Inventeur: VINCENT, Rémi, F-38100 Grenoble (FR); ESCRIBANO, Sylvie, F-38100 Grenoble (FR); FRANCO, Alejandro, F-38320 Eybens (FR); GUETAZ, Laure, F-38000 Grenoble (FR); KROSNICKI, Guillaume, F-38100 Grenoble (FR)
(74) Mandataire: Guérin, Jean-Philippe
(86) Numéro de dépôt international: PCT/EP2012/055618
(87) Numéro de publication internationale: WO 2012/130931

(56) Documents cités:
- EP-A1- 1 742 282
- EP-A1- 1 830 424
- JP-A- 2005 135 671
- JP-A- 2009 064 604
- US-A1- 2004 126 644
- ZHANG S ET AL: "A review of platinum-based catalyst layer degradation in proton exchange membrane fuel cells", JOURNAL OF POWER SOURCES, ELSEVIER SA, CH, vol. 194, no. 2, 1 décembre 2009 (2009-12-01), pages 588-600, XP026499637, ISSN: 0378-7753, DOI: 10.1016/J.JPOWSOUR.2009.06.073 [extrait le 2009-06-30]

## Description

L'invention concerne les piles à combustible, et en particulier les piles à combustible à membrane d'échange de protons.

Les piles à combustible sont notamment envisagées comme source d'énergie pour des véhicules automobiles produits à grande échelle dans le futur. Une pile à combustible est un dispositif électrochimique qui convertit de l'énergie chimique directement en énergie électrique. Une pile à combustible comprend un empilement en série de plusieurs cellules. Chaque cellule génère une tension de l'ordre de 1Volt, et leur empilement permet de générer une tension d'alimentation d'un niveau plus élevé, par exemple de l'ordre d'une centaine de volts.

Parmi les types de piles à combustible connus, on peut notamment citer la pile à combustible à membrane d'échange de protons, dite PEM. De telles piles à combustible présentent des propriétés de compacité particulièrement intéressantes. Chaque cellule comprend une membrane électrolytique permettant seulement le passage de protons et non le passage des électrons. La membrane permet de séparer la pile en deux compartiments pour éviter une réaction directe entre les gaz réactifs. La membrane comprend une anode sur une première face et une cathode sur une deuxième face, cet ensemble étant usuellement désigné par le terme assemblage membrane-électrodes.

Au niveau de l'anode, du dihydrogène utilisé comme carburant est ionisé pour produire des protons traversant la membrane. Les électrons produits par cette réaction migrent vers une plaque d'écoulement, puis traversent un circuit électrique externe à la cellule pour former un courant électrique. Au niveau de la cathode, de l'oxygène est réduit et réagit avec les protons pour former de l'eau.

La pile à combustible peut comprendre plusieurs plaques d'écoulement, par exemple en métal, empilées les unes sur les autres. La membrane est disposée entre deux plaques d'écoulement. Les plaques d'écoulement peuvent comprendre des canaux et orifices pour guider les réactifs et les produits vers/depuis la membrane. Les plaques sont également électriquement conductrices pour former des collecteurs des électrons générés au niveau de l'anode. Des couches de diffusion gazeuse (pour Gaz Diffusion Layer en langue anglaise) sont interposées entre les électrodes et les plaques d'écoulement et sont en contact avec les plaques d'écoulement.

Les piles à combustible à membrane échangeuse de protons présentent encore une durée de vie trop réduite. Les piles à combustible subissent ainsi un vieillissement qui se caractérise par exemple par un engorgement de la cathode par de l'eau ou par une dégradation irréversible des nanomatériaux de la cathode, par exemple due à la dégradation du support carboné et du catalyseur. Ces phénomènes aboutissent à une dégradation progressive des performances de la pile.

La gestion de la présence de l'eau dans la pile à combustible est relativement complexe. En effet, la réaction cathodique implique la génération d'eau et de l'eau est également nécessaire pour maintenir la conductivité protonique de la membrane. Les gaz réactifs peuvent ainsi nécessiter leur humidification préalable pour permettre l'humidification de la membrane. Cependant, une quantité excessive d'eau peut entraîner le noyage des sites catalytiques et ainsi une interruption du fonctionnement de la pile en bloquant l'accès de l'oxygène aux sites réactifs.

Certaines études scientifiques ont également constaté que des dégradations de performances pouvaient être dues à un changement progressif des propriétés nanostructurelles de la cathode. Certaines études ont également constaté que l'épaisseur de la couche active cathodique subissait une forte diminution après seulement quelques heures de fonctionnement. Une telle dégradation est attribuée à une réaction de corrosion du support carboné de la cathode par de l'eau selon la réaction suivante :

C + 2H₂O → CO₂ + 4H⁺ + 4e⁻

Le potentiel d'oxydoréduction de cette réaction est d'environ 0,2V (ENH). Comme le potentiel cathodique de la pile est généralement supérieur à 0,2V, les conditions d'une telle réaction sont alors respectées. De plus la présence permanente d'eau en grande quantité à la cathode favorise la réaction.

Par ailleurs, la corrosion peut être accentuée durant les phases d'arrêt/démarrage ou de cycles de puissance de la pile. En effet, la membrane n'est pas parfaitement imperméable aux gaz. Ainsi, du dioxygène se diffuse à travers la membrane pour atteindre l'anode. La quantité de dihydrogène disponible peut s'avérer insuffisante pour réagir avec le dioxygène à l'anode. Le dioxygène à l'anode réagit alors avec les protons générés par la réaction de corrosion. Ce dioxygène agit ainsi comme une pompe à protons et accentue le phénomène de corrosion. La corrosion du support carboné réduit la surface catalytique de la cathode, induit la séparation de particules de platine du support, et augmente la résistance électrique de contact entre la cathode et sa couche de diffusion gazeuse.

D'autres facteurs de dégradation sont l'oxydation, la dissolution et la recristallisation du platine. La maturation électrochimique induit par ailleurs une augmentation de la taille des particules de platine, défavorable au fonctionnement de la pile.

Ces différents phénomènes affectent encore trop la durée de vie des piles à combustible pour des applications grand public. La diffusion de piles à combustible dans des produits distribués auprès du grand public nécessite d'accroître sensiblement leur durée de vie et de réduire leur coût de fabrication.

Le document JP 2009 064604 A décrit une pile à combustible incluant une membrane échangeuse de protons, une anode et une cathode fixées de part et d'autre de la membrane échangeuse de protons. La cathode délimite un conduit d'écoulement entre une zone d'entrée de dioxygène et une zone de sortie d'eau. La cathode comprend un support du catalyseur incluant un premier matériau graphité sur lequel le catalyseur est fixé et un deuxième matériau sur lequel le catalyseur est fixé, le deuxième matériau présentant une résistance à la corrosion par l'oxygène supérieure à la résistance du matériau graphité.

Une seule couche englobe ces deux différents matériaux supports de catalyseur et, dans cette couche, la concentration en support à haute résistance à la corrosion est plus importante à proximité de la zone d'entrée de dioxygène. Le document EP 1 830 424 A1 décrit également une pile à combustible à membrane échangeuse de protons dont la cathode comprend deux matériaux supports de catalyseurs distincts dont l'un présente une résistance accrue à la corrosion. Mais, à la différence du document précédent, le document EP 1 830 424 A1 décrit la présence de ces deux supports dans deux couches différentes où la couche ayant une concentration plus élevée en matériau support à résistance accrue à la corrosion est présente de manière localisée à la fois au voisinage de la zone d'entrée et de la zone de sortie du dioxygène dans la cathode.

Le document « Use of a carbon nanocage as a catalyst support in polymer electrolyte membrane fuel cells » rédigé par LIM Katie, OH Hyung-Suk et KIM Hansung, dans Electrochemistry communications 2009, vol. 11, no6, pp. 1131-1134, décrit des structures nanométriques pour former un support carboné sur lequel du platine est fixé pour former une cathode. Une telle cathode présente une résistance à la corrosion sensiblement accrue mais présente un coût de fabrication incompatible avec une industrialisation pour une diffusion auprès du grand public.

Il existe donc un besoin pour une pile à combustible qui présente à la fois une durée de vie accrue et un coût de fabrication réduit. L'invention porte ainsi sur une pile à combustible, comprenant :
- une membrane échangeuse de protons ;
- une anode et une cathode fixées de part et d'autre de la membrane échangeuse de protons, la cathode délimitant un conduit d'écoulement entre une zone d'entrée de dioxygène et une zone de sortie d'eau.

La cathode comprend un support du matériau catalyseur incluant un premier matériau graphité sur lequel le catalyseur est fixé et un deuxième matériau sur lequel le catalyseur est fixé, ce deuxième matériau présentant une résistance à la corrosion par l'oxygène supérieure à la résistance du matériau graphité, la quantité de ce deuxième matériau au niveau de la zone d'entrée étant supérieure à la quantité de ce deuxième matériau au niveau de la sortie.

La cathode comprend une première couche incluant le premier matériau et une deuxième couche incluant le deuxième matériau, l'épaisseur de la deuxième couche décroissant entre la zone d'entrée et la zone de sortie.

Selon une variante, la concentration du deuxième matériau au niveau de la zone d'entrée est supérieure à 10% en masse.

Selon une autre variante, la concentration du deuxième matériau au niveau de la zone d'entrée est supérieure d'au moins 50% à la concentration du deuxième matériau au niveau de la zone de sortie.

Selon encore une variante, le deuxième matériau est choisi dans le groupe comprenant le fullerène, le TiO2 et le SnO2.

Selon encore une autre variante, l'anode délimite un conduit d'écoulement entre une zone d'entrée de dihydrogène et une zone de sortie de dihydrogène, la zone de sortie de dihydrogène étant disposée en vis-à-vis de la zone d'entrée de dioxygène.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective éclatée schématique d'une cellule de pile à combustible ;
- la figure 2 est une vue en coupe d'une cellule de pile à combustible selon un premier mode de réalisation de l'invention ;
- la figure 3 est une vue en coupe d'une cellule de pile à combustible selon des variantes du premier mode de réalisation.

Les inventeurs ont constaté que les piles à combustible à membrane échangeuse de protons présentaient une usure généralement supérieure sur la cathode au niveau de l'entrée de dioxygène.

L'invention propose une pile à combustible comportant un support du matériau catalyseur incluant un premier matériau graphité sur lequel le catalyseur est fixé. Le support de la cathode inclut également un deuxième matériau sur lequel le catalyseur est fixé, ce deuxième matériau présentant une résistance à la corrosion par l'oxygène supérieure à la résistance du matériau graphité. La quantité de ce deuxième matériau au niveau de l'entrée de dioxygène est supérieure à la quantité de ce deuxième matériau au niveau de la sortie d'eau.

Ainsi, l'invention permet de façon optimale d'améliorer la protection contre la corrosion de la cathode au niveau de l'entrée d'oxygène sans pour autant altérer trop sensiblement son coût de fabrication ou ses performances.

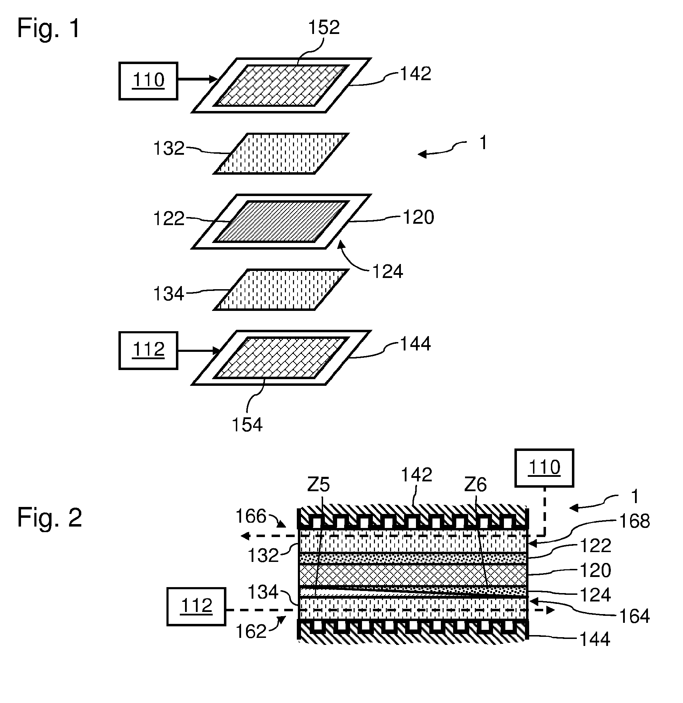

La figure 1 est une vue en perspective éclatée schématique d'une cellule 1 d'une pile à combustible. La cellule 1 est du type à membrane échangeuse de protons ou membrane à électrolyte polymère. La cellule 1 de la pile à combustible comprend une source de carburant 110 alimentant en dihydrogène une première entrée 168 de la cellule. La cellule 1 comprend également une première sortie 166 pour évacuer le dihydrogène en excès. La cellule 1 comporte un conduit d'écoulement s'étendant entre la première entrée et la première sortie. La cellule 1 comprend également une source d'air 112 alimentant une deuxième entrée 162 de la cellule en air, l'air contenant du dioxygène utilisé comme oxydant. La cellule 1 comprend en outre une deuxième sortie 164 pour évacuer le dioxygène en excès, l'eau de la réaction et de la chaleur. La cellule 1 comporte un conduit d'écoulement s'étendant entre la deuxième entrée 162 et la deuxième sortie 164. La cellule 1 peut également présenter un circuit de refroidissement non illustré.

La cellule 1 comprend une couche d'électrolyte 120 formée par exemple d'une membrane polymère. La cellule 1 comprend également une anode 122 et une cathode 124 placées de part et d'autre de l'électrolyte 120 et fixées sur l'électrolyte 120. La cellule 1 présente des plaques de guidage d'écoulement 142 et 144 disposées en vis-à-vis respectivement de l'anode 122 et de la cathode 144. La cellule 1 présente de plus une couche de diffusion de gaz 132 disposée dans le conduit d'écoulement entre l'anode 122 et la plaque de guidage 142. La cellule 1 présente par ailleurs une couche de diffusion de gaz 134 disposée dans le conduit d'écoulement entre la cathode 124 et la plaque de guidage 144.

Les plaques 142 et 144 comportent des faces orientées vers la couche d'électrolyte 120 comportant respectivement des zones 152 et 154 comportant un ensemble de rainures ou de canaux. Les zones 152 et 154 comportant les rainures ou canaux permettent d'acheminer respectivement le dihydrogène et l'air à l'intérieur de la cellule 1.

Les plaques 142 et 144 sont réalisées en métal tel que de l'acier inoxydable de façon connue en soi. Les plaques 142 et 144 sont usuellement désignées par le terme de plaques bipolaires, un même composant comportant généralement une plaque de guidage 142 appartenant à une cellule et une plaque de guidage 144 appartenant à une cellule adjacente. Les plaques 142 et 144 sont conductrices et permettent de collecter le courant généré par la cellule 1.

La couche d'électrolyte 120 forme une membrane semi-perméable permettant une conduction protonique tout en étant imperméable aux gaz présents dans la cellule 1. La couche d'électrolyte 120 empêche également un passage des électrons entre l'anode 122 et la cathode 124. La couche d'électrolyte 120 ne forme cependant pas une barrière parfaite à la diffusion de gaz, et en particulier à la diffusion de dioxygène.

Durant le fonctionnement de la pile à combustible, de l'air s'écoule entre l'électrolyte 120 et la plaque 144, et du dihydrogène s'écoule entre l'électrolyte 120 et la plaque 142. Au niveau de l'anode 122, le dihydrogène est ionisé pour produire des protons qui traversent l'électrolyte 120. Les électrons produits par cette réaction sont collectés par la plaque 142 et appliqués sur une charge électrique connectée à la cellule 1 pour former un courant électrique. Au niveau de la cathode 124, de l'oxygène est réduit et réagit avec les protons pour former de l'eau. Les réactions au niveau de l'anode et de la cathode sont régies comme suit :

H₂ → 2H⁺ + 2e⁻ au niveau de l'anode ;

4H⁺ 4e⁻+ O₂ → 2H₂O au niveau de la cathode.

Durant son fonctionnement, une cellule 1 génère usuellement une tension continue entre l'anode et la cathode de l'ordre de 1 V.

Dans les modes de réalisation qui vont être détaillés par la suite, la sortie 166 est en vis-à-vis de l'entrée 162, et l'entrée 168 est en vis-à-vis de la sortie 164. Le dihydrogène et le dioxygène s'écoulent donc dans des sens opposés à l'intérieur de la cellule 1. La diffusion de dioxygène est particulièrement critique au niveau de l'entrée 162, cette zone étant la plus sujette à la corrosion. En effet, au niveau de l'entrée 162, seule une partie limitée de ce dioxygène a alors réagi à la cathode 124, et l'entrée 162 se trouve au niveau de la sortie d'évacuation de dihydrogène côté anode 122, et donc au niveau d'une zone où la quantité de dihydrogène pouvant réagir avec le dioxygène diffusé est plus réduite. Le dioxygène diffusé au niveau de l'entrée 162 a donc ainsi tendance à réagir avec des protons issus de la réaction de corrosion d'un support carboné de la cathode 124.

Selon l'invention, la cathode 124 comporte un support du matériau catalyseur incluant un premier matériau graphité sur lequel le catalyseur est fixé. Le support de la cathode 124 inclut également un deuxième matériau sur lequel le catalyseur est fixé, ce deuxième matériau présentant une résistance à la corrosion par l'oxygène supérieure à la résistance du matériau graphité. La quantité de ce deuxième matériau au niveau de l'entrée de dioxygène 162 est supérieure à la quantité de ce deuxième matériau au niveau de la sortie 164. On diminue ainsi le phénomène de corrosion de la cathode 124 sans altérer excessivement le prix de revient de la cellule ou ses performances.

Le deuxième matériau pourra par exemple inclure du fullerène, du SnO₂ dopé ou du TiO₂ dopé. Différents oxydes métalliques pourront également être inclus dans le deuxième matériau. Ce deuxième matériau devra permettre une diffusion des gaz et une diffusion des protons. En limitant l'utilisation de ce deuxième matériau aux zones nécessaires, on contient le prix de revient de la cathode 124 ou la dégradation de ses performances. En effet, on peut être amené à utiliser un deuxième matériau présentant soit un coût supérieur au premier matériau, soit des performances dégradées par rapport au premier matériau (permittivité protonique, couplage avec le catalyseur...).

Le matériau catalyseur utilisé à la cathode 124 sera avantageusement du platine, pour ses excellentes performances catalytiques.

La figure 2 est une vue en coupe schématique de la cellule 1 de la pile à combustible selon un premier mode de réalisation de l'invention. Dans le premier mode de réalisation illustré à la figure 2, la cathode 124 comporte deux couches Z5 et Z6. Les couches Z5 et Z6 sont superposées dans la direction de leur épaisseur. La couche Z5 présente une concentration homogène en matériau renforcé. La couche Z6 présente une concentration homogène en matériau graphité. L'épaisseur de la couche Z5 décroît de façon continue entre l'entrée 162 et la sortie 164. L'épaisseur de la couche Z6 croît de façon continue entre l'entrée 162 et la sortie 164. L'assemblage des couches Z5 et Z6 présente une épaisseur constante.

Pour la formation d'une cathode 124 selon ce mode de réalisation, on peut réaliser chaque couche Z5 et Z6 par impression avec une encre spécifique. L'épaisseur de ces couches pourra être ajustée en projetant une quantité plus ou moins élevée d'encre sur les différents emplacements de la membrane 120. Ces encres pourront contenir un solvant, le matériau support graphité, le matériau support résistant, et le catalyseur.

Bien que non illustré, on peut également réaliser une cathode 124 présentant une couche comportant une concentration en matériau renforcé décroissante entre l'entrée 162 et la sortie 164.

Avantageusement, la concentration du deuxième matériau au niveau de l'entrée 162 est supérieure à 10% en masse. De préférence, la concentration du deuxième matériau au niveau de la zone d'entrée 162 est supérieure d'au moins 50% à la concentration du deuxième matériau au niveau de la zone de sortie 164.

Des tests comparatifs ont été effectués avec des cellules selon l'invention par rapport à une cellule comparable selon l'art antérieur. On a constaté une nette amélioration de la durée de vie des cellules selon l'invention, de l'ordre de 35% par rapport à la cellule selon l'art antérieur.

Selon un premier perfectionnement de l'invention, l'épaisseur de la membrane 120 au niveau de l'entrée de dioxygène 162 est supérieure à son épaisseur au niveau de la sortie 164. En pratique, la partie de la membrane 120 au niveau de l'entrée présente une résistance protonique supérieure à sa résistance protonique au niveau de la sortie 164. Ainsi, la diffusion du dioxygène au niveau de l'entrée 162 est réduite.

En utilisant une épaisseur de la membrane 120 inférieure au niveau de la sortie 164, on favorise la traversée des protons dans une zone de la cathode 124 moins critique en terme de corrosion. Ainsi, les performances de la cellule 1 ne sont que marginalement réduites pour un gain en durée de vie conséquent.

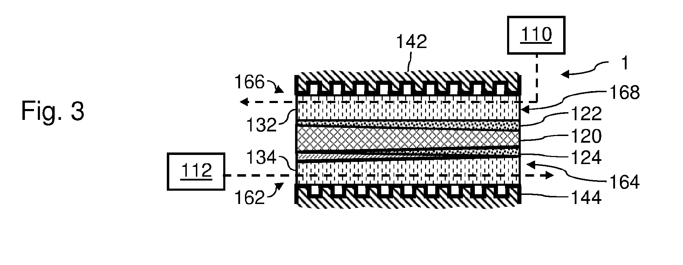

Selon une première variante du premier perfectionnement illustrée à la figure 3, la membrane 120 présente une épaisseur qui décroît de façon continue entre l'entrée 162 et la sortie 164. Une telle membrane 120 peut être réalisée de façon particulièrement aisée, par exemple par un procédé de coulée combiné à une évaporation, qui permet de contrôler aisément l'épaisseur locale de la membrane 120. Une telle variation d'épaisseur peut être réalisée en déposant localement une plus ou moins grande quantité de matériau lors de la coulée.

Avantageusement, l'épaisseur de la membrane 120 au niveau de l'entrée 162 est supérieure d'au moins 40% à l'épaisseur de la membrane 120 au niveau de la sortie 164.

L'anode 122 peut par exemple comprendre des supports incluant une association d'agrégats de carbone et de ionomères. Des nanoparticules de platine sont alors fixées sur ces agrégats. Le ionomère de la cathode ou de l'anode peut être identique au ionomère utilisé pour former la membrane. L'anode 122 peut être réalisée par application d'une encre sur la membrane 120 ou sur une couche de diffusion gazeuse respective. L'encre peut typiquement comprendre la combinaison d'un solvant, d'un ionomère et de carbone platiné.

La couche de diffusion de gaz 132 sert à diffuser du dihydrogène depuis un canal d'écoulement de la plaque 142 vers l'anode 122.

La couche de diffusion de gaz 134 sert à diffuser de l'air depuis un canal d'écoulement de la plaque 144 vers la cathode 124.

Les couches de diffusion de gaz 132 et 134 peuvent par exemple être réalisées de façon connue en soi sous forme de fibre, de feutre ou de tissu de graphite sur lequel est fixé un agent hydrophobe tel que du polytétrafluoroéthylène. Avantageusement, les couches de diffusion de gaz 132 et 134 une épaisseur au moins 5 fois supérieure à l'épaisseur de l'assemblage incluant la membrane 120, l'anode 122 et la cathode 124. Les couches de diffusion de gaz 132 et 134 étant en effet généralement compressibles, celles-ci permettent alors d'absorber l'hétérogénéité d'épaisseur de l'assemblage membrane-électrodes. Les couches de diffusion de gaz 132 et 134 pourront par exemple présenter une épaisseur comprise entre 200 et 500µm.

Selon un deuxième perfectionnement de l'invention, l'anode 122 peut présenter une quantité de catalyseur au niveau de la sortie du dihydrogène 166 inférieure à la quantité de catalyseur au niveau de l'entrée de dihydrogène 168. Ainsi, on limite l'aptitude du dioxygène ayant traversé la membrane 120 à réagir avec les protons traversant la membrane plutôt qu'avec le dihydrogène en plus faible quantité au niveau de la sortie 166. On limite ainsi l'effet de pompe à protons au niveau de la sortie 166.

La figure 3 illustre une variante du premier mode de réalisation selon ce deuxième perfectionnement. Dans cette variante, l'anode 122 présente une concentration de catalyseur homogène. L'épaisseur de l'anode 122 au niveau de la sortie 166 est cependant inférieure à son épaisseur au niveau de l'entrée 168. Plus précisément, l'épaisseur de l'anode 122 croît de façon continue entre la sortie 166 et l'entrée 168. Ainsi, la quantité de catalyseur au niveau de la sortie 166 est inférieure à la quantité de catalyseur au niveau de l'entrée 168.

La formation d'une telle anode 122 pourra être réalisée par des procédés d'impression à jet d'encre.

Bien que non illustré, on peut également envisager de réaliser une anode 122 d'épaisseur homogène avec une concentration de catalyseur décroissante entre l'entrée 168 et la sortie 166.

## Revendications

1. Pile à combustible (1), comprenant :
- une membrane échangeuse de protons (120) ;
- une anode (122) et une cathode (124) fixées de part et d'autre de la membrane échangeuse de protons, la cathode (124) délimitant un conduit d'écoulement entre une zone d'entrée de dioxygène (162) et une zone de sortie d'eau (164) ;
- la cathode (124) comprend un support du matériau catalyseur incluant un premier matériau graphité (Z6) sur lequel le catalyseur est fixé et un deuxième matériau (Z5) sur lequel le catalyseur est fixé, ce deuxième matériau présentant une résistance à la corrosion par l'oxygène supérieure à la résistance du matériau graphité, la quantité de ce deuxième matériau au niveau de la zone d'entrée étant supérieure à la quantité de ce deuxième matériau au niveau de la sortie ;
**caractérisée en ce que** :
- la cathode comprend une première couche (Z6) incluant le premier matériau et une deuxième couche incluant le deuxième matériau, l'épaisseur de la deuxième couche (Z5) décroissant entre la zone d'entrée (162) et la zone de sortie (164).

2. Pile à combustible selon l'une quelconque des revendications précédentes, dans laquelle la concentration du deuxième matériau au niveau de la zone d'entrée est supérieure à 10% en masse.

3. Pile à combustible selon l'une quelconque des revendications précédentes, dans laquelle la concentration du deuxième matériau au niveau de la zone d'entrée est supérieure d'au moins 50% à la concentration du deuxième matériau au niveau de la zone de sortie.

4. Pile à combustible selon l'une quelconque des revendications précédentes, dans laquelle le deuxième matériau est choisi dans le groupe comprenant le fullerène, le TiO₂ et le SnO₂.

5. Pile à combustible selon l'une quelconque de revendications précédentes, dans laquelle l'anode (122) délimite un conduit d'écoulement entre une zone d'entrée de dihydrogène (168) et une zone de sortie de dihydrogène (166), la zone de sortie de dihydrogène (166) étant disposée en vis-à-vis de la zone d'entrée de dioxygène (162).

## Patentansprüche

1. Brennstoffzelle (1), die enthält:
- eine Protonentauschermembran (120);
- eine Anode (122) und eine Kathode (124), die zu beiden Seiten der Protonentauschermembran befestigt sind, wobei die Kathode (124) einen Strömungskanal zwischen einer Disauerstoff-Eintrittszone (162) und einer Wasser-Austrittszone (164) begrenzt;
- die Kathode (124) einen Träger des Katalysematerials enthält, der ein erstes graphithaltiges Material (Z6), an dem der Katalysator fixiert ist, und ein zweites Material (Z5) umfasst, an dem der Katalysator fixiert ist, wobei dieses zweite Material eine Festigkeit gegenüber der Korrosion durch Sauerstoff aufweist, die höher ist als die Festigkeit des graphithaltigen Materials, wobei die Menge dieses zweiten Materials im Bereich der Eintrittszone größer ist als die Menge dieses zweiten Materials im Bereich des Austritts;
**dadurch gekennzeichnet, dass**:
- die Kathode eine erste Schicht (Z6), die das erste Material umfasst, und eine zweite Schicht enthält, die das zweite Material umfasst, wobei die Dicke der zweiten Schicht (Z5) zwischen der Eintrittszone (162) und der Austrittszone (164) abnimmt.

2. Brennstoffzelle nach dem vorhergehenden Anspruch, wobei die Konzentration des zweiten Materials im Bereich der Eintrittszone höher als 10 Masseprozent ist.

3. Brennstoffzelle nach einem der vorhergehenden Ansprüche, wobei die Konzentration des zweiten Materials im Bereich der Eintrittszone um mindestens 50% höher ist als die Konzentration des zweiten Materials im Bereich der Austrittszone.

4. Brennstoffzelle nach einem der vorhergehenden Ansprüche, wobei das zweite Material aus der Gruppe ausgewählt wird, die Fulleren, TiO₂ und SnO₂ enthält.

5. Brennstoffzelle nach einem der vorhergehenden Ansprüche, wobei die Anode (122) einen Strömungskanal zwischen einer Diwasserstoff-Eintrittszone (168) und einer Diwasserstoff-Austrittszone (166) begrenzt, wobei die Diwasserstoff-Austrittszone (166) gegenüber der Disauerstoff-Eintrittszone (162) angeordnet ist.

## Claims

1. Fuel cell stack (1) comprising:
- a proton exchange membrane (120); and
- an anode (122) and a cathode (124) which are fixed on either side of the proton exchange membrane, the cathode (124) bounding a flow channel between a dioxygen inlet zone (162) and a water outlet zone (164);
- the cathode (124) comprises a support for a catalyst material including a first graphitized material (Z6) to which the catalyst is fixed and a second material (Z5) to which the catalyst is fixed, this second material having a resistance to corrosion by oxygen greater than the resistance of the graphitized material, the amount of this second material level with the inlet zone being greater than the amount of this second material level with the outlet,
**characterized in that**:
- the cathode comprises a first layer (Z6) including the first material and a second layer including the second material, the thickness of the second layer (Z5) decreasing between the inlet zone (162) and the outlet zone (164).

2. Fuel cell stack according to the preceding claim, in which the concentration of the second material level with the inlet zone is higher than 10% by weight.

3. Fuel cell stack according to any one of the preceding claims, in which the concentration of the second material level with the inlet zone is greater by at least 50% than the concentration of the second material level with the outlet zone.

4. Fuel cell stack according to any one of the preceding claims, in which the second material is chosen from the group comprising the fullerenes, TriO₂ and SnO₂.

5. Fuel cell stack according to any one of the preceding claims, in which the anode (122) bounds a flow channel between a dihydrogen inlet zone (168) and a dihydrogen outlet zone (166), the dihydrogen outlet zone (166) being placed facing the dioxygen inlet zone (162) .
